# EUROPÄISCHE PATENTANMELDUNG

(11) **EP 1 818 424 A1**
(43) Veröffentlichungstag der Anmeldung: **15.08.2007**
(21) Anmeldenummer: 06002673.9
(22) Anmeldetag: 09.02.2006
(51) Int. Cl.: C23C 4/18, C23C 30/00

(54) **Verfahren zur Herstellung einer Schicht mit thermographischem Leuchtstoff und ein Schichtsystem**

(71) Anmelder: SIEMENS AKTIENGESELLSCHAFT, 80333 München (DE)
(72) Erfinder: Schumann, Eckart, Dr., 45468 Mülheim an der Ruhr (DE); Wessler, Berit, Dr., 82024 Taufkirchen (DE)

(57) **Zusammenfassung**

Wärmedämmschichten mit eingebettetem thermographischem Leuchtstoff sind bekannt, aber verändern sich während der ersten Betriebsstunden, so dass eine Referenzmessung vor dem Einsatz andere Werte liefert als während der ersten Betriebsstunden.

Das erfindungsgemäße Verfahren sieht vor, dass eine Wärmebehandlung so durchgeführt ist, dass sich die Mess- oder Signalwerte für den gesamten Einsatz des Bauteils sich ergeben.

## Beschreibung

Die Erfindung betrifft ein Verfahren zur Herstellung eines Schichtsystems mit thermographischem Leuchtstoff gemäß Anspruch 1 und ein Schichtsystem nach Anspruch 20.

Ein derartiges Schichtsystem und ein derartiges Verfahren sind aus der EP 1 105 550 B1 bekannt. Der Trägerkörper ist ein Bauteil einer Gasturbine. Der Trägerkörper ist aus einem Metall. Aufgrund einer in einer Gasturbine auftretenden hohen Temperatur von 1200° C in der Umgebung des Bauteils kann es zu einer Schädigung des Metalls des Bauteils kommen. Um dies zu verhindern, ist auf dem Bauteil eine aus dem Schichtsystem gebildete Wärmedämmschicht (Thermal Barrier Coating, TBC) aufgebracht. Die Wärmedämmschicht sorgt dafür, dass ein verminderter Wärmeaustausch zwischen dem Trägerkörper aus dem Metall und der Umgebung stattfindet. Dadurch heizt sich eine Metalloberfläche des Bauteils weniger stark auf. An der Metalloberfläche des Bauteils tritt eine Oberflächentemperatur auf, die niedriger ist als die Temperatur in der Umgebung des Bauteils.

Der Wärmedämmstoff bildet ein Basismaterial der Wärmedämmschicht. Die mechanischen und thermischen Eigenschaften der Wärmedämmschicht hängen im Wesentlichen von den Eigenschaften des Wärmedämmstoffs ab. Das Basismaterial der bekannten Wärmedämmschicht ist ein Metalloxid. Das Metalloxid ist beispielsweise ein mit Yttrium stabilisiertes Zirkoniumoxid (YSZ). Eine thermische Leitfähigkeit dieses Wärmedämmstoffs beträgt zwischen 1W/m·K und 3W/m·K. Um einen effizienten Schutz des Trägerkörpers zu gewährleisten, beträgt eine Schichtdicke der Wärmedämmschicht etwa 250µm. Als Alternative zum mit Yttrium stabilisierten Zirkoniumoxid ist als Wärmedämmstoff ein Metalloxid in Form eines Yttriumaluminiumgranats (YAG) angegeben.

Um die Wärmedämmschicht und den Trägerkörper fest zu verbinden, ist auf der Oberfläche des Bauteils eine metallische Zwischenschicht (Bond Coat) aus einer Metalllegierung aufgebracht. Zur Verbesserung der Verbindung kann zwischen der Wärmedämmschicht und dem Bauteil zusätzlich eine keramische Zwischenschicht aus einem keramischen Material, beispielsweise Aluminiumoxid, angeordnet sein.

In die Wärmedämmschicht ist ein so genannter thermographischer Leuchtstoff eingebettet oder auf diese aufgebracht. Dieser Leuchtstoff (Luminophor) kann durch Anregung mit Anregungslicht einer bestimmten Anregungswellenlänge zur Emission eines Lumineszenzlichts mit bestimmten Emissionswellenlängen (oder einem charakteristischen Emissionsspektrum) angeregt werden kann. Das Anregungslicht ist beispielsweise UV-Licht. Das Emissionslicht ist beispielsweise sichtbares Licht. Durch elektronische Übergänge zwischen Energiezuständen des Aktivators wird der Leuchtvorgang hervorgerufen. Ein derartiger Leuchtstoff besteht beispielsweise aus einem Festkörper mit einem Kristallgitter (Wirtsgitter), in das ein so genannter Aktivator eingebettet ist. Der Festkörper ist mit dem Aktivator dotiert. Der Aktivator ist zusammen mit dem gesamten Festkörper am Leuchtvorgang des Leuchtstoffs beteiligt.

Bei der bekannten Wärmedämmschicht ist das jeweilige Basismaterial der Wärmedämmschicht mit einem Aktivator dotiert. Es liegt eine Wärmedämmschicht aus dem Leuchtstoff vor. Der dabei verwendete Aktivator ist jeweils ein Seltenerdelement. Im Fall des mit Yttrium stabilisierten Zirkoniumoxids ist das Seltenerdelement beispielsweise Europium, Thulium oder Dysprosium.

Der Wärmedämmstoff Yttriumaluminiumgranat ist mit den Seltenerdelementen Dysprosium, Thulium oder Terbium dotiert.

Bei der bekannten Wärmedämmschicht wird die Tatsache ausgenutzt, dass eine Emissionseigenschaft des Lumineszenzlichts des Leuchtstoffs, beispielsweise eine Emissionsintensität oder eine Emissionsabklingzeit, von der Leuchtstofftemperatur des Leuchtstoffs abhängig ist. Aufgrund dieser Abhängigkeit wird auf die Temperatur der Wärmedämmschicht mit dem Leuchtstoff geschlossen. Damit dieser Zusammenhang hergestellt werden kann, kann die Wärmedämmschicht das Anregungslicht im Uv-Bereich absorbieren. Gleichzeitig ist dafür gesorgt, dass das Lumineszenzlicht des Leuchtstoffs von der Wärmedämmschicht abgestrahlt und detektiert werden kann.

Um die optische Zugänglichkeit zu gewährleisten, ist beispielsweise auf dem Trägerkörper nur eine einzige Wärmedämmschicht mit dem Leuchtstoff angeordnet. Als alternative Lösung dazu wird auf der Wärmedämmschicht eine weitere Wärmedämmschicht aufgetragen, die für das Anregungslicht und das Lumineszenzlicht des Leuchtstoffs transparent ist. Das Lumineszenzlicht des Leuchtstoffs kann durch die weitere Wärmedämmschicht hindurch treten.

Es gibt Leuchtstoffe, wie auch das YAG:Dy, welche für Einsatztemperaturen bis 1600°C geeignet sind.

Aufgabe der vorliegenden Erfindung ist es daher, ein Verfahren zur Herstellung einer Schicht mit einem thermographischen Leuchtstoff und ein Schichtsystem anzugeben, die bei Temperaturen insbesondere von 700°C bis 1200°C hinaus reproduzierbare und zuverlässige Lumineszenzeigenschaften aufweisen.

Die Aufgabe wird gelöst durch ein Verfahren gemäß Anspruch 1 und ein Schichtsystem gemäß Anspruch 20.

In den Unteransprüchen sind weitere vorteilhafte Maßnahmen aufgelistet, die beliebig in vorteilhafter Art und Weise miteinander kombiniert werden können.

Es zeigen
- Figur 1, 2, 3: Schichtsysteme, die mit dem erfindungsgemäßen Verfahren behandelt werden,
- Figur 4: eine Gasturbine,
- Figur 5: perspektivisch eine Turbinenschaufel,
- Figur 6: perspektivisch eine Brennkammer.

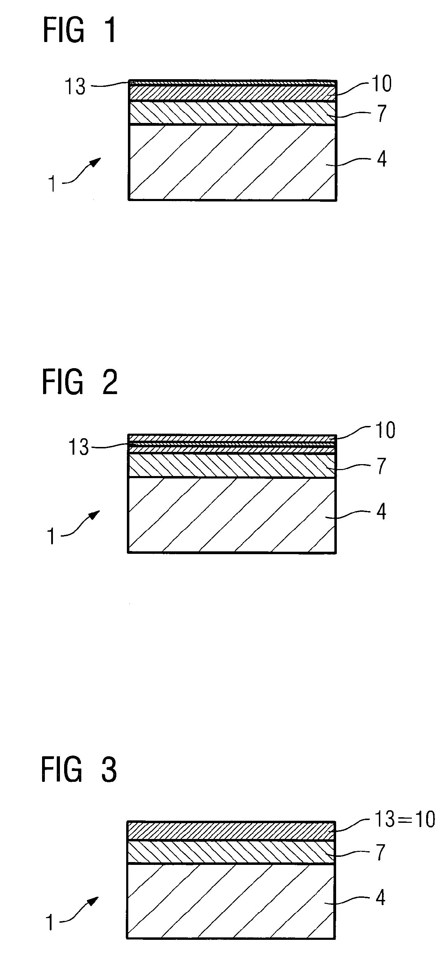

Figur 1 zeigt ein Schichtsystem 1 bestehend aus einem Substrat 4, das bei Bauteilen, die bei hohen Temperaturen eingesetzt werden, insbesondere aus einer nickel- oder kobaltbasierten Superlegierung besteht.

Auf dem Substrat 4 ist vorzugsweise eine metallische Anbindungsschicht 7 vorhanden, insbesondere aus einer Legierung des Typs MCrA1X, die zum Schutze vor Oxidation und Korrosion und auch zur besseren Anbindung einer keramischen Schicht 10 dient.

Das Material der keramischen Schicht 10 ist beispielsweise eine Yttrium-stabilsierte Zirkonoxidschicht, eine Pyrochlorverbindung, wie z.B. Gadoliniumzirkonat oder Gadoliniumhafnat, ein Oxid wie z.B. Aluminiumoxid, Gadoliniumoxid oder Hafniumoxid sowie Kombinationen davon.

In Figur 1 ist auf der keramischen Schicht 10 eine äußerste Schicht 13 (overlay und beispielsweise einem heißen Medium in einem Heißgaskanal 11 direkt ausgesetzt ist) aufgebracht, die den thermographischen Leuchtstoff enthält oder vollständig aus dem thermographischen Leuchtstoff besteht.

Äußerste Schicht bedeutet allgemein, dass die Schicht einem Medium direkt ausgesetzt ist. Dieses Medium kann ein korrosives oder oxidatives Medium sein oder wie bei einer Turbine, Dampf- oder Gasturbine, ein heißes Medium sein.

In Figur 2 ist diese Schicht 13 nicht als äußerste Schicht vorhanden, sondern als Zwischenschicht in der keramischen Wärmedämmschicht 10 vorhanden. Diese kann auf der Anbindungsschicht 7 (nicht dargestellt) oder innerhalb der keramischen Schicht 10 angeordnet sein.

Ebenso kann die keramische Wärmedämmschicht 10 vollständig aus dem thermographischen Leuchtstoff (Eu₂Zr₂O₇) bestehen oder dieser ist gleichmäßig als Sekundärphase in dem Material der Wärmedämmschicht 10 (z.B. ZrO₂) verteilt (Fig. 3).

Die verwendeten Beschichtungsmethoden, wie Plasmaspritzen (APS, VPS), Gasbedampfungsverfahren (PVD, CVD), Kaltgasspritzen oder Hochgeschwindigkeitsspritzen (HVOF) führen oft dazu, dass der thermographischen Leuchtstoff zumindest teilweise in amorphen Zustand vorliegt. Ebenso kann in den ersten Betriebsstunden des Schichtsystems 1 eine Diffusion aufgrund von starken Konzentrationsgradienten zwischen der Schicht 13 und Schicht 10 erfolgen, die zu Veränderungen führen oder zur Ausbildung von bestimmten Phasen.

Jedenfalls ist das gewünschte Signal des thermographischen Leuchtstoff direkt nach der Herstellung nicht dasselbe, wie nach den ersten Einsatzstunden (= 2h bis 4h entsprechend der Dauer der Wärmebehandlung).
Daher wird erfindungsgemäß eine Wärmebehandlung durchgeführt, die bewirkt, dass nahezu ein Gleichgewichtszustand eingestellt wird, der sich gar nicht oder kaum verändert, also dass amorphe Phasen kristallisieren oder Phasen sich ausbilden und so die Lumineszenz gemessen werden kann, die sich ansonsten während den ersten Einsatzstunden einstellen würde.

Eine über Plasmaspritzen hergestellte Schicht YAG:Dy ist erst nach Ausheizen bei 1250°C funktionsfähig (da vorher amorph) und zeigt ab dann erst konstante Eigenschaften.

Die Temperatur die Wärmebehandlung liegt vorzugsweise oberhalb der Einsatztemperatur der Schicht 13 des Schichtsystems 1 und erfolgt vorzugsweise vor dem Einsatz, also vor dem ersten Aussetzen höherer Temperaturen.
Vorzugsweise ist die Temperatur der Wärmebehandlung um 50°C gegenüber der Einsatztemperatur der Schicht 13 erhöht.

Ebenso kann die Wärmebehandlung bei einer Einsatztemperatur der Schicht 13 durchgeführt werden. In diesem Fall kann die Wärmebehandlung auch in den ersten Einsatzstunden erfolgen.

Die Kalibrierung der Signale der Schicht 13 erfolgt nach einer bestimmten Zeit, die als ausreichend für die Wärmebehandlungsdauer erachtet wird und vorzugsweise vor dem Einbau des Schichtsystems 1.

Wenn das Schichtsystem 1 erst im Einsatz wärmebehandelt wird, erfolgt die Kalibrierung im eingebauten Zustand.

Im eingebauten Zustand des Schichtsystems (1) kann die Einsatztemperatur verwendet werden oder die Einsatztemperatur wird für die Dauer der Wärmebehandlung kurzzeitig und einmalig über die maximal zulässige Temperatur erhöht.

Vorzugsweise erfolgt die Wärmebehandlung durch einen Gasbrenner oder Plasmabrenner, der nur die Schicht 10 (Fig. 2, 3), 13 (Fig. 1) erwärmt, da ansonsten das Substrat 4 zu hohe Temperaturen erfährt.

So erhält man vor dem Einsatz ein Signal, dass sich während der gesamten Betriebsdauer nicht oder kaum noch verändert.

Die Wärmebehandlung wird insbesondere bei einer Temperatur von 1250°C oder höher und insbesondere für maximal 4 Stunden durchgeführt.
Vorzugsweise liegt die Dauer der Wärmebehandlung bei maximal 2 Stunden. Als vorteilhaft hat sich eine Wärmebehandlung von 2 Stunden +/- 10% erwiesen.

Der Indikator kann vorzugsweise YAG:Dy sein oder einer der bekannten thermographischen Leuchtstoffe wie aus der EP 1 105 550 B1 oder aus dem Zeitschriftenbeitrag "Thermal Conductivity, Phase Stability, and Oxidation Resistance of Y3Al5O12 (YAG)/Y2O3-ZrO2(YSZ) Thermal-Barrier Coatings", Oxidation of Metals, Vol. 16, Noa. ¾, April 2004 sein. Die Thermolumineszenz-Indikatorwerkstoffe dieser Schriften sind Teil dieser Offenbarung.
Weitere Beispiele für den Thermolumineszenz-Indikatorwerkstoff sind beispielsweise Europium dotiertes Gadoliniumzirkonat (Gd₂Zr₂O₇ oder Europiumzirkonat (Eu₂Zr₂O₇) (hier bildet der Thermolumineszenz-Indikatorwerkstoff die Schicht 13) oder Europium dotiertes Zirkonoxid, insbesondere Yttrium-stabilisiertes Zirkonoxid. Ebenso ist es möglich, Europium dotiertes Samariumzirkonat (Sm₂Zr₂0₇) zu verwenden.
Es könnten aber auch Leuchtstoffe YAG mit Terbium, Thulium, Europium verwendet werden; YSZ mit Thulium, Dysprosium, Europium und GZO (Gd₂Zr₂O₇) mit Thulium, Dysprosium, Terbium und Europium.

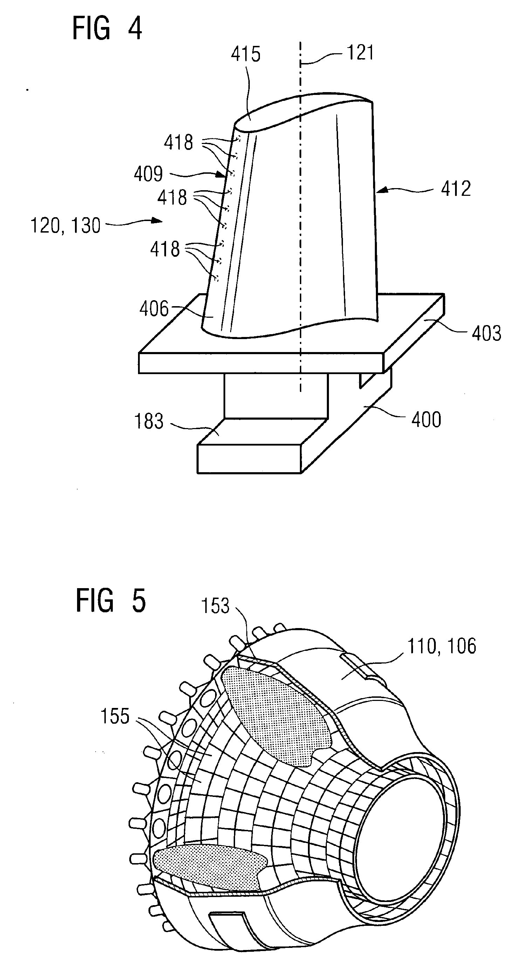

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

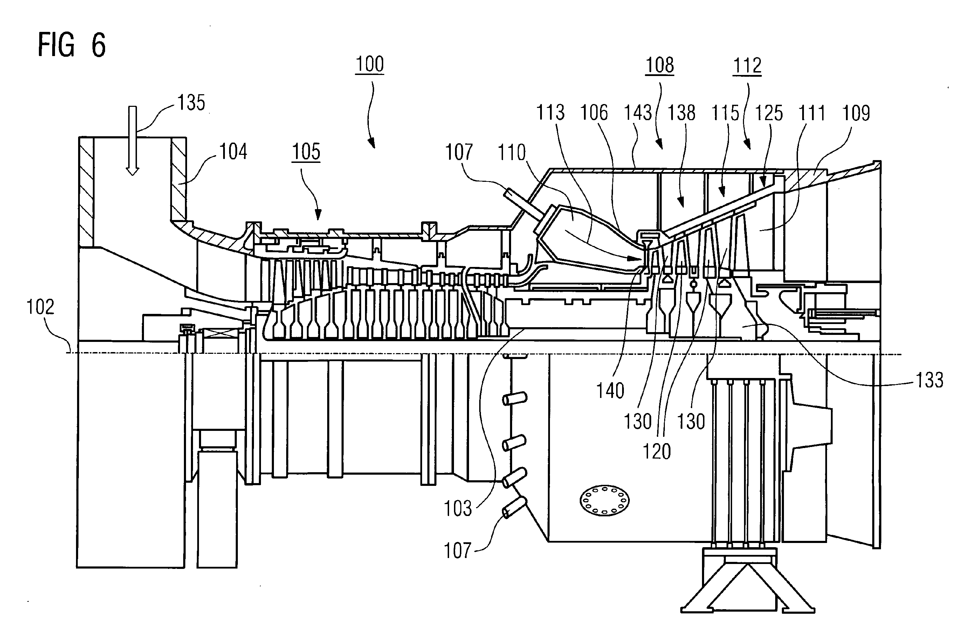

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Herstellung eines Schichtsystems (1), aufweisend eine Schicht (13) mit einem thermographischen Leuchtstoff,
**dadurch gekennzeichnet, dass**
eine Wärmebehandlung der Schicht (13) vor dem Einsatz oder zu Beginn des Einsatzes des Schichtsystems (1) durchgeführt wird.

2. Verfahren nach Anspruch 1,
**dadurch gekennzeichnet, dass**
die Wärmebehandlung der Schicht (13) vor dem Einsatz des Schichtsystems (1) durchgeführt wird.

3. Verfahren nach Anspruch 1,
**dadurch gekennzeichnet, dass**
die Wärmebehandlung der Schicht (13) zu Beginn des Einsatzes des Schichtsystems (1) durchgeführt wird.

4. Verfahren nach Anspruch 1, 2 oder 3,
**dadurch gekennzeichnet, dass**
die Wärmebehandlung bei mindestens 1250°C,
insbesondere bei 1250°C durchgeführt wird.

5. Verfahren nach Anspruch 1, 2, 3 oder 4,
**dadurch gekennzeichnet, dass**
die Temperatur der Wärmebehandlung oberhalb der Einsatztemperatur einer Schicht (13) liegt,
insbesondere um 50°C erhöht ist.

6. Verfahren nach Anspruch 1, 2, 3 oder 4,
**dadurch gekennzeichnet, dass**
die Temperatur der Wärmebehandlung bei der Einsatztemperatur der Schicht (13) des Schichtsystems (1) liegt.

7. Verfahren nach Anspruch 1, 2, 3, 4, 5 oder 6,
**dadurch gekennzeichnet, dass**
die Dauer der Wärmebehandlung der Schicht (13) bei maximal 4 Stunden, insbesondere bei maximal 2 Stunden, liegt.

8. Verfahren nach Anspruch 7,
**dadurch gekennzeichnet, dass**
die Dauer der Wärmebehandlung der Schicht (13) bei etwa 2 Stunden liegt.

9. Verfahren nach Anspruch 1, 2, 3, 4, 5, 6, 7 oder 8,
**dadurch gekennzeichnet, dass**
die Schichten (7, 10, 13) des Schichtsystems (1) mittels Plasmaspritzen, Gasphasenbeschichtungsverfahren (CVD, PVD), Kaltgasspritzen oder Hochgeschwindigkeitsspritzen (HVOF) hergestellt werden.

10. Verfahren nach Anspruch 1,
**dadurch gekennzeichnet, dass**
der thermographische Leuchtstoff YAG:Dy ist.

11. Verfahren nach einem oder mehreren der vorherigen Ansprüche,
**dadurch gekennzeichnet,**
**dass** die Schicht (13) innerhalb einer keramischen Schicht (10) angeordnet ist.

12. Verfahren nach einem oder mehreren der vorherigen Ansprüche 1 bis 10,
**dadurch gekennzeichnet,**
**dass** die Schicht (13) als äußerste Schicht im Schichtsystem vorhanden ist.

13. Verfahren nach einem oder mehreren der vorherigen Ansprüche 1 bis 10,
**dadurch gekennzeichnet,**
**dass** das Schichtsystem (1) eine äußerste keramische Schicht (10) aufweist und
**dass** die Schicht (13) mit dem thermographischen Leuchtstoff die äußerste keramische Schicht (10) darstellt.

14. Verfahren nach Anspruch 1, 11, 12 oder 13,
**dadurch gekennzeichnet, dass**
der thermographische Leuchtstoff in der Schicht (13) gleichmäßig verteilt ist.

15. Verfahren nach einem oder mehreren der vorherigen Ansprüche 1 bis 14,
**dadurch gekennzeichnet, dass**
die erhöhte Temperatur für die Wärmebehandlung lokal in der Schicht (13) oder
in der Schicht (10),
die die Schicht (13) enthält,
erzeugt wird.

16. Verfahren nach Anspruch 1 oder 15,
**dadurch gekennzeichnet, dass**
die Energie der Oberfläche des Schichtsystems (1) zugeführt wird,
insbesondere durch einen Plasmabrenner oder Gasbrenner.

17. Verfahren nach einem oder mehreren der vorherigen Ansprüche 1 bis 16,
**dadurch gekennzeichnet, dass**
die-Kalibrierung des Signals der Schicht (13) mit dem thermographischen Leuchtstoff nach der Wärmebehandlung durchgeführt wird.

18. Verfahren nach einem oder mehreren der vorherigen Ansprüche, **dadurch gekennzeichnet, dass**
eine keramische Schicht (10,13) Yttrium-stabilisiertes Zirkonoxid enthält.

19. Verfahren nach einem oder mehreren der vorherigen Ansprüche,
**dadurch gekennzeichnet, dass**
eine keramische Schicht (10,13) eine Pyrochlorverbindung, insbesondere Gadoliniumzirkonat, oder
Gadoliniumhafnat,
ein Oxid,
insbesondere Aluminiumoxid, Gadoliniumoxid oder Hafniumoxid,
sowie Kombinationen davon enthält.

20. Schichtsystem (1),
hergestellt nach einem oder mehreren der vorherigen Ansprüche 1 bis 19.

21. Schichtsystem nach Anspruch 20,
bei dem ein Substrat (4) des Schichtsystems (1) nickelbasiert ist.

22. Schichtsystem nach Anspruch 20,
bei dem ein Substrat (4) des Schichtsystems (1) kobaltbasiert ist.
